(19)

Europäisches
Patentamt
European
Patent Office
Office européen
des brevets

(11) **EP 4 506 904 A1**

(12) **EUROPEAN PATENT APPLICATION**

(43) Date of publication:
**12.02.2025 Bulletin 2025/07**

(21) Application number: **24188862.7**

(22) Date of filing: **16.07.2024**

(51) International Patent Classification (IPC):
***G06V 10/44*** *(2022.01)* ***G06V 20/58*** *(2022.01)*

(52) Cooperative Patent Classification (CPC):
**G06V 20/58; G06V 10/44;** G06V 10/243;
G06V 10/247

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 JP 2023131433**

(71) Applicant: **KABUSHIKI KAISHA TOYOTA
JIDOSHOKKI
Kariya-shi, Aichi 448-8671 (JP)**

(72) Inventor: **OKAYAMA, Ken
Kariya-shi, Aichi 448-8671 (JP)**

(74) Representative: **Hoffmann Eitle
Patent- und Rechtsanwälte PartmbB
Arabellastraße 30
81925 München (DE)**

(54) **OBSTACLE DETECTION DEVICE AND OBSTACLE DETECTION METHOD**

(57) An obstacle detection device (20) includes: a camera (21); and a detector (22) for detecting an obstacle (P). A part of the obstacle (P) located on the reference plane (R) serves as a detection object (Pf). The detector (22) is configured to: estimate coordinates (Uff, Vff) of the detection object (Pf) in an image coordinate system of a captured image (If); convert the coordinates (Uff, Vff) of the detection object (Pf) in the image coordinate system of the captured image (If) into coordinates (Uef, Vef) of the detection object (Pf) in an image coordinate system of a developed image (Ie) that is parallel to the reference plane (R); and calculate a position of the detection object (Pf) on the reference plane (R) by using the distance from the camera (21) to the reference plane (R) and a relational expression between the coordinates (Uef, Vef) in the image coordinate system of the developed image (Ie) and coordinates (Xf, Yf, Zf) of the detection object (Pf) in a world coordinate system with the camera (21) centered.

EP 4 506 904 A1

**Description**

The present invention relates to an obstacle detection device and an obstacle detection method.

BACKGROUND ART

Japanese Patent No. 6940906 discloses a monitoring device that is configured to monitor the surroundings of a working machine. The monitoring device includes an image capturing device and a processor. The image capturing device captures images of the surroundings of the working machine. The processor extracts an image showing the presence of a person from the images captured by the image capturing device. The processor measures a distance between the person and the working machine by using the image showing the presence of the person and installation parameters of the image capturing device. Specifically, the processor acquires two dimensional coordinates of the foot (i.e., the foot coordinates) of the person in the captured image. The processor measures the distance between the person and the working machine by using the foot coordinates and the installation parameters of the image capturing device.

The monitoring device disclosed in Japanese Patent No. 6940906 can acquire the distance between the person and the working machine, but cannot acquire the position of the person on the ground.

The present invention, which has been made in light of the above described problem, is directed to providing an obstacle detection device and an obstacle detection method for detecting an actual position of an obstacle in the real world.

SUMMARY

In accordance with an aspect of the present invention, there is provided an obstacle detection device. The obstacle detection device includes: a camera attached to an industrial vehicle; and a detector configured to detect an obstacle from a captured image captured by the camera. The camera is arranged such that an optical axis of the camera is inclined with respect to a reference plane that is located at a known distance from the camera. A part of the obstacle located on the reference plane serves as a detection object. The detector is configured to: estimate coordinates of the detection object in an image coordinate system of the captured image; convert the coordinates of the detection object in the image coordinate system of the captured image into coordinates of the detection object in an image coordinate system of a developed image that is parallel to the reference plane; and calculate a position of the detection object on the reference plane by using the distance from the camera to the reference plane and a relational expression between the coordinates of the detection object in the image coordinate system of the developed image and coordinates of the detection object in a world coordinate system that is a real world coordinate system with the camera centered.

In accordance with another aspect of the present invention, there is provided an obstacle detection method. The obstacle detection method includes detecting an obstacle from a captured image by using a detector. The captured image is captured by a camera attached to an industrial vehicle. The camera is arranged such that an optical axis of the camera is inclined with respect to a reference plane that is located at a known distance from the camera. A part of the obstacle located on the reference plane serves as a detection object. The obstacle detection method includes: estimating coordinates of the detection object in an image coordinate system of the captured image; converting the coordinates of the detection object in the image coordinate system of the captured image into coordinates of the detection object in an image coordinate system of a developed image that is parallel to the reference plane; and calculating a position of the detection object on the reference plane by using the distance from the camera to the reference plane and a relational expression between the coordinates of the detection object in the image coordinate system of the developed image and coordinates of the detection object in a world coordinate system that is a real world coordinate system with the camera centered.

Other aspects and advantages of the invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the embodiments together with the accompanying drawings in which:

FIG. 1 is a plan view of a forklift truck;

FIG. 2 is a block diagram of the forklift truck;

FIG. 3 is a schematic diagram for explaining an image coordinate system of a captured image, an image coordinate system of a developed image, and a world coordinate system;

FIG. 4 is a flowchart of an obstacle detection method;

FIG. 5 shows a captured image;

FIG. 6 shows a developed image; and

FIG. 7 shows a captured image for explaining an estimation of foot coordinates according to a modification example.

DETAILED DESCRIPTION OF THE EMBODIMENTS

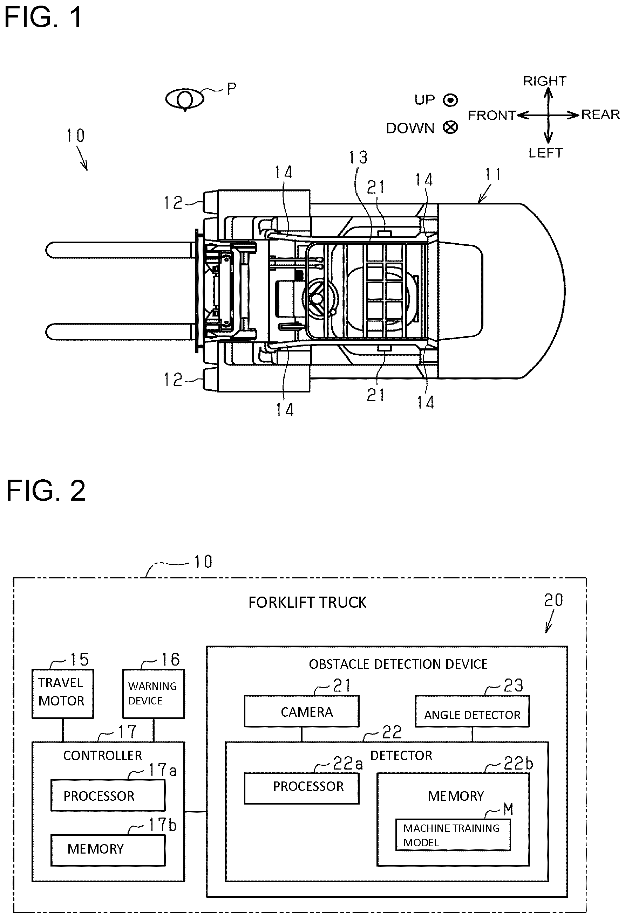

The following will describe an obstacle detection device and an obstacle detection method according to an embodiment of the present invention with reference to FIGS 1 to 6. The obstacle detection device and the obstacle detection method according to the present embodiment are applicable to an industrial vehicle, such as a forklift truck. In the following description, directions, such as front, rear, right, left, up, and down, refer to the direction with respect to the forward movement of the forklift truck. The right-left direction corresponds to the vehicle width direction of the forklift truck.

Forklift truck

As illustrated in FIG. 1, a forklift truck 10 includes a vehicle body 11, and two drive wheels 12. The vehicle body 11 includes a head guard 13 and four pillars 14. The head guard 13 is supported by the four pillars 14.

As illustrated in FIG. 2, the forklift truck 10 includes a travel motor 15. Driving the travel motor 15 rotates the drive wheels 12, thereby allowing the travel of the forklift truck 10. The forklift truck 10 includes a warning device 16. The warning device 16 is configured to issue warning if an obstacle is present around the forklift truck 10. Examples of the warning device 16 include a warning buzzer and a warning light. The forklift truck 10 includes a controller 17. The controller 17 controls the forklift truck 10. Specifically, the controller 17 controls the travel motor 15 to control the travel of the forklift truck 10. The controller 17 controls the warning operation of the warning device 16.

The controller 17 includes a processor 17a and a memory 17b. The processor 17a is, for example, a central processing unit (CPU), a graphics processing unit (GPU), or a digital signal processor (DSP). The memory 17b includes a random access memory (RAM) and a read only memory (ROM). The memory 17b stores a program code or an instruction that causes the processor 17a to execute processing. The memory 17b, i.e., a non-transitory computer-readable storage medium, includes any media accessible by general or dedicated computers. The controller 17 may include a hardware circuit, such as an application specific integrated circuit (ASIC) or a field programmable gate array (FPGA). The controller 17, which is a processing circuit, may include one or more processors that operate according to computer programs, one or more hardware circuits, such as the ASIC or the FPGA, or a combination thereof.

Obstacle detection device

The forklift truck 10 has an obstacle detection device 20. The obstacle detection device 20 is configured to detect the presence of an obstacle around the forklift truck 10. In the present embodiment, the obstacle is a human, more specifically, a person P, such as a worker. The obstacle detection device 20 includes a plurality of cameras 21, a detector 22, and an angle detector 23. The plurality of cameras 21 and the angle detector 23 are connected to the detector 22.

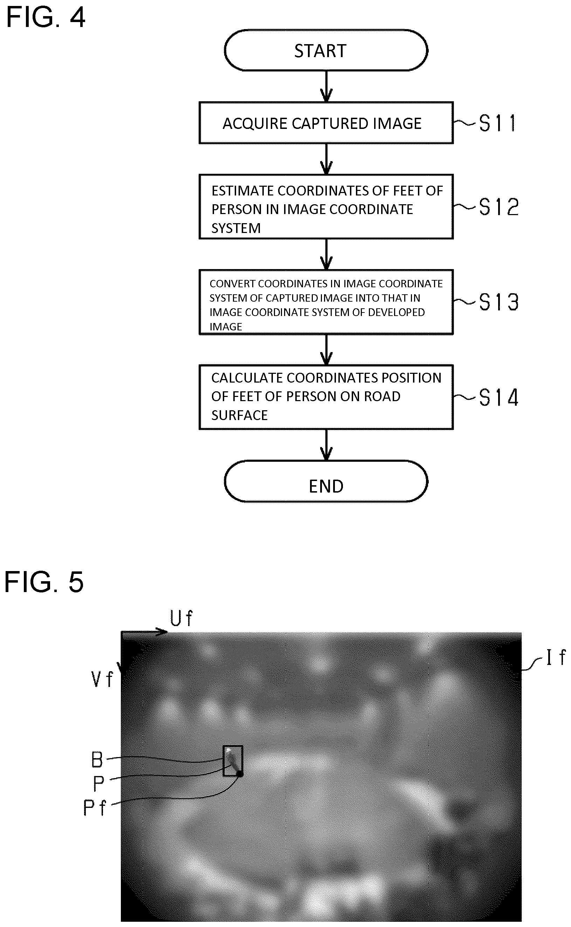

The cameras 21 are digital cameras. Each of the cameras 21 includes a lens and an imaging element. The camera 21 is a monocular camera. In the present embodiment, the camera 21 includes a fish-eye lens. That is, the camera 21 according to the present embodiment is a fish-eye camera. The camera 21 creates a captured image If (see FIG. 5), which is a fish-eye image showing a distorted image of an object. The imaging element is a charge coupled device (CCD) image sensor or a complementary metal oxide semiconductor (CMOS) image sensor, for example. The imaging element consists of pixels.

As illustrated in FIG. 1, the camera 21 is mounted on the forklift truck 10. In the present embodiment, the cameras 21 are attached to the head guard 13 on opposite sides of the head guard 13 in the vehicle width direction. That is, two cameras 21 are attached to the forklift truck 10. Each of the cameras 21 according to the present embodiment captures images viewed from the side of the forklift truck 10. That is, the obstacle detection device 20 according to the present embodiment detects the presence of an obstacle beside the forklift truck 10. The camera 21 repeatedly captures an image at a predetermined capturing cycle.

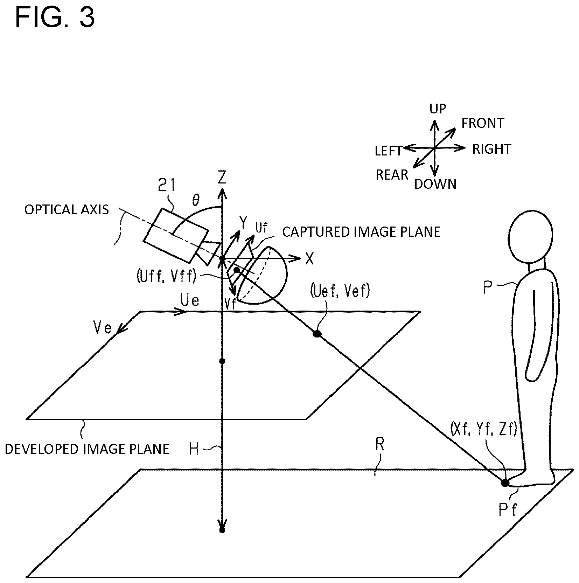

FIG. 3 illustrates the world coordinate system, which represents a real world coordinate system with the camera 21 centered. The world coordinate system is the three-dimensional coordinate system in which the X-axis, the Y-axis, and the Z-axis are perpendicular to each other. In the present embodiment, the X-axis expresses the right-left direction of the forklift truck 10. The Y-axis expresses the front-rear direction of the forklift truck 10. The Z-axis expresses the up-down direction of the forklift truck 10. A road surface R on which the forklift truck 10 travels is expressed by a plane perpendicular to the Z-axis.

In the present embodiment, the camera 21 is positioned at a height H from the road surface R. In other words, the camera 21 is installed at an installation height H from the road surface R. Accordingly, the road surface R serves as a reference plane of the present invention that is located at a known distance from the camera 21. A part of the obstacle located on the reference plane serves as a detection object of the present invention. According to the present embodiment, feet Pf of the person P on the road surface R serves as a part of the obstacle located on the reference plane. That is, according to the present embodiment, the feet Pf serves as the detection object of the present invention.

The camera 21 is arranged such that the optical axis of the camera 21 is inclined with respect to the reference plane. That is, the camera 21 is arranged such that the optical axis of the camera 21 is inclined with respect to the road surface R. According to the present embodiment, the camera 21 is rotated by a pitch angle θ about the Y-axis so that the camera 21 captures a lower view beside the forklift truck 10. That is, the optical axis of the camera 21 is inclined at the pitch angle θ with respect to the Z-axis. The pitch angle θ is 30 degrees, for example. According to the present embodiment, the camera 21 is not rotated about the X-axis and the Z-axis. That is, the roll angle φ and the yaw angle ψ of the camera 21 are zero degrees.

The detector 22 is configured to detect the obstacle from the captured image If captured by the camera 21.

As illustrated in FIG. 2, the detector 22 includes a processor 22a and a memory 22b. Examples of the processor 22a include a CPU, a GPU, and a DSP. The memory 22b includes a RAM and a ROM. The memory 22b stores a program code or an instruction that causes the processor 22a to execute processing. The memory 22b, i.e., a non-transitory computer-readable storage medium, includes any media accessible by general or dedicated computers. The detector 22 may include hardware circuits, such as an ASIC and an FPGA. The detector 22, which is a processing circuit, may include one or more processors that operate according to computer programs, one or more hardware circuits, such as the ASIC or the FPGA, or a combination thereof.

The memory 22b stores a machine training model M for machine learning. In other words, the detector 22 has a machine training model M. The machine training model M according to the present embodiment is a model for performing object detection and keypoint detection at the same time. Specifically, the machine training model M receives an image as input, and outputs coordinates of the detection object of the obstacle in the input image as well as outputting and indicating the obstacle in the input image with a bounding box B. According to the present embodiment, the machine training model M receives an image as input, and outputs the coordinates of the feet Pf on the image as input as well as outputting and indicating the person P surrounded by the bounding box B in the input image.

The machine training model M is produced by machine learning using training data. Each of the training data includes a training image of a part of (i.e., the detection object) of the obstacle, the bounding box B surrounding the obstacle in the training image, and the coordinates of the detection object on the training image. According to the present embodiment, each of the training data includes a training image of the feet Pf of the person P, the bounding box B surrounding the person P in the training image, and the coordinates of the feet Pf on the training image. The training image is the captured image If, which is a fish-eye image. That is, the training image is the captured image If, which is not yet corrected. Distortion correction of the image will be described later.

The angle detector 23 detects the angle of the camera 21. The angle of the camera 21 is defined by the pitch angle θ, the roll angle ψ, and the yaw angle ψ of the camera 21. The angle detector 23 includes an inertial measurement unit (IMU).

Obstacle detection method

The following will describe the obstacle detection method and an obstacle detection process performed by the obstacle detection device 20. The obstacle detection device 20 according to the present embodiment performs the following process, each time the camera 21 captures an image.

As illustrated in FIG. 4, the detector 22 acquires the captured image If from the camera 21 in step S11.

FIG. 5 shows the captured image If captured by the camera 21. As previously described, the camera 21 according to the present embodiment is a fish-eye camera, and the captured image If is a fish-eye image. As illustrated in FIG. 1, if the person P is present beside the forklift truck 10, the person P is presented in the captured image If.

As illustrated in FIG. 4, the detector 22 estimates the coordinates of the detection object in an image coordinate system of the captured image If in step S12. The detector 22 according to the present embodiment estimates the obstacle in the captured image If and indicates it with the bounding box B at the same time as estimating the coordinates of the detection object in the image coordinate system of the captured image If. In other words, the detector 22 estimates the person P in the captured image If and indicates it with the bounding box B at the same time as estimating the coordinates of the feet Pf in the image coordinate system of the captured image If.

FIGS. 3 and 5 illustrate the image coordinate system of the captured image If. The top left corner of the captured image If corresponds to the origin of the image coordinate system of the captured image If. The image coordinate system of the captured image If is a two-dimensional coordinate system in which the Uf axis and the Vf axis are perpendicular to each other. The Uf axis extends along the right-left direction of the captured image If. The Vf axis extends along the up-down direction of the captured image If. The Uf axis and the Vf axis are perpendicular to the optical axis of the camera 21.

According to the present embodiment, the detector 22 uses the machine training model M to estimate the person P in the captured image If and indicate the person P with the bounding box B at the same time as estimating the coordinates (Uff, Vff) of the feet Pf in the image coordinate system of the captured image If. Specifically, the machine training model M receives the captured image If as input, of which distortion has not been corrected yet. The machine training model M then outputs and indicates the person P in the input captured image If with the bounding box B. In addition, the machine training model M outputs the coordinates (Uff, Vff) of the feet Pf in the input captured image If.

As illustrated in FIG. 4, in step S13, the detector 22 converts the coordinates of the feet Pf in the image coordinate system of the captured image If into the coordinates of the feet Pf in an image coordinate system of a developed image.

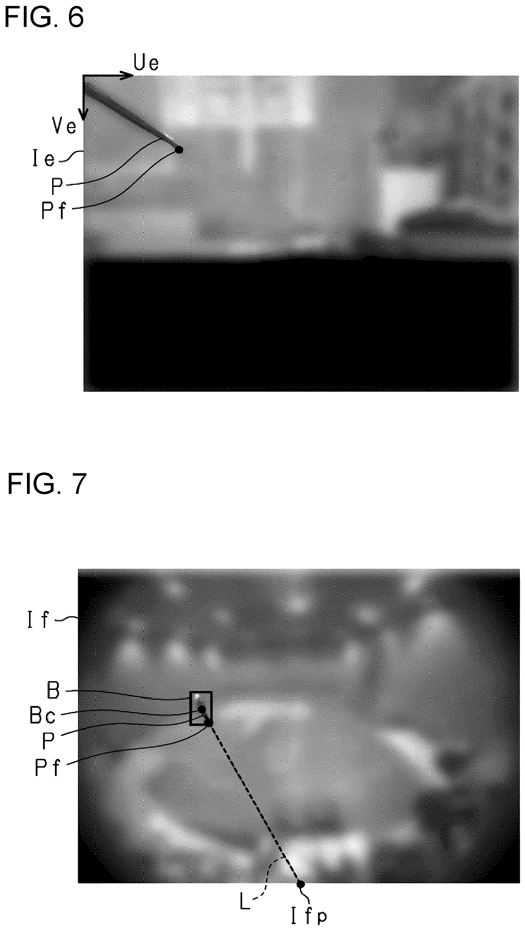

As illustrated in FIGS. 3 and 6, the image coordinate system of the developed image is an image coordinate system of a developed image Ie that is parallel to the reference plane. The developed image Ie is a plane perpendicular to the Z-axis. The top left corner of the developed image Ie corresponds to the origin of the image coordinate system of the developed image. The image coordinate system of the developed image Ie is a two-dimensional coordinate system in which the Ue axis and the Ve axis are perpendicular to each other. The Ue axis extends along the right-left direction of the developed image Ie. The Ve axis extends along the up-down direction of the developed image Ie. The Ue axis and the Ve axis are perpendicular to the Z-axis.

Although the developed image Ie is illustrated for the sake of convenience, the developed image Ie is not generated in actual processing because the detector 22 does not convert the captured image If into the developed image Ie. The conversion of the captured image If into the developed image Ie is optionally available if it is set in advance that the coordinates in the image coordinate system of the captured image are converted into the coordinates in the image coordinate system of the developed image, which is parallel to the reference plane.

The detector 22 converts the coordinates (Uff, Vff) of the feet Pf in the image coordinate system of the captured image into the coordinates (Uef, Vef) of the feet Pf in the image coordinate system of the developed image. Specifically, the detector 22 first corrects the distortion of the captured image If. The detector 22 then converts the coordinates (Uff, Vff) of the feet Pf in the image coordinate system of the captured image of which distortion is corrected into the coordinates (Uef, Vef) of the feet Pf in the image coordinate system of the developed image. This conversion of the coordinates uses a rotation matrix RM. The rotation matrix RM is generated based on the angle of the camera 21 detected by the angle detector 23. That is, the detector 22 uses the angle of the camera 21 detected by the angle detector 23 to convert the coordinates. In addition, this conversion of the coordinates uses a camera parameter K expressed by Equation (1).

[Math. 1]

$$K = \begin{pmatrix} fx & 0 & cx \\ 0 & fy & cy \\ 0 & 0 & 1 \end{pmatrix} \dots (1)$$

The distance from the camera 21 to a developed image plane is represented by fx and fy. The distance represented by fx and fy may be different from the focal length of the camera 21. The center coordinates of the developed image Ie are represented by cx and cy. The camera parameter K may be any parameter. For example, the larger the values of fx and fy are, the greater the distance from the camera 21 to the developed image plane. In other words, the developed image plane has to be parallel to the road surface R, but may be located at an arbitrary distance from the camera 21.

As illustrated in FIG. 4, the detector 22 calculates the position of the detection object on the reference plane in step S14. In the present embodiment, the detector 22 calculates the position of the feet Pf on the road surface R. The detector 22 calculates the position of the feet Pf on the road surface R by using the distance from the camera 21 to the road surface R as the reference plane and a relational expression between the coordinates (Uef, Vef) of the feet Pf in the image coordinate system of the developed image and the coordinates (Xf, Yf, Zf) of the feet Pf in the world coordinate system.

The relational expression between the coordinates (Uef, Vef) of the feet Pf in the image coordinate system of the developed image and the coordinates (Xf, Yf, Zf) of the feet Pf in the world coordinate system is expressed by Equation (2). In Equation (2), s represents a scale value. Equation (3) is obtained by modifying Equation (2). The inverse matrix $K^{-1}$ of the camera parameter K in Equation (3) is expressed by Equation (4).

[Math. 2]

$$s \begin{pmatrix} Uef \\ Vef \\ 1 \end{pmatrix} = K \begin{pmatrix} Xf \\ Yf \\ Zf \end{pmatrix} \dots (2)$$

$$\begin{pmatrix} Xf \\ Yf \\ Zf \end{pmatrix} = sK^{-1} \begin{pmatrix} Uef \\ Vef \\ 1 \end{pmatrix} \dots (3)$$

$$K^{-1} = \frac{1}{fxfy} \begin{pmatrix} fy & 0 & -fycx \\ 0 & fx & -fxcy \\ 0 & 0 & fxfy \end{pmatrix} \dots (4)$$

The distance from the camera 21 to the road surface R corresponds to the installation height H of the camera 21 from the road surface R. Accordingly, it can be assumed that Zf = -H. The coordinate Zf is equal to s (Zf = s). Accordingly, s is equal to -H (s = -H). Because of Equation (3) and s = -H, the position of the feet Pf on the road surface R is calculated as expressed by Equation (5) and Equation (6).

[Math. 3]

$$Xf = -H \left( \frac{Uef - cx}{fx} \right) \dots (5)$$

$$Yf = -H \left( \frac{Vef - cy}{fy} \right) \dots (6)$$

In such a way, the detector 22 detects the position of the feet Pf of the person P in the real world. Furthermore, the detector 22 may calculate the distance from the camera 21 to the feet Pf based on the position of the feet Pf in the real world.
The controller 17 controls the forklift truck 10 based on the results detected by the detector 22. The controller 17 of the present embodiment controls the forklift truck 10 based on the position of the person P in the real world detected by the detector 22. Specifically, the control of the forklift truck 10 by the controller 17 differs depending on whether the person P is on the travel path of the forklift truck 10. For example, when the person P is not on the travel path of the forklift truck 10, the controller 17 lowers the warning level issued by the warning device 16 compared to when the person P is on the travel path of the forklift truck 10. For example, when the person P is on the travel path of the forklift truck 10, the controller 17 controls the travel motor 15 to decelerate the forklift truck 10 or prevent the forklift truck 10 from starting.

Operations and advantageous effects of embodiment

The following will describe the operations and the advantageous effects of the present embodiment.

(1) The camera 21 is arranged such that the optical axis of the camera 21 is inclined with respect to the road surface R that is located at a known distance from the camera 21. The feet Pf of the person P is positioned on the road surface R. The detector 22 estimates the coordinates of the feet Pf in the image coordinate system of the captured image If. The detector 22 converts the coordinates of the feet Pf in the image coordinate system of the captured image If into the coordinates of the feet Pf in the image coordinate system of the developed image Ie, which is parallel to the road surface R. The detector 22 calculates the position of the feet Pf on the road surface R by using the distance from the camera 21 to the road surface R and the relational expression between the coordinates of the feet Pf in the image coordinate system of the developed image and the coordinates of the feet Pf in the world coordinate system, which is a real world coordinate system with the camera 21 centered.
This allows the detector 22 to convert the coordinates of the feet Pf in the image coordinate system of the captured image into the coordinates of the feet Pf in the image coordinate system of the developed view image. The distance from the camera 21 to the road surface R is known. This allows the detector 22 to calculate the position of the feet Pf on the road surface R by using the relational expression between the coordinates of the feet Pf in the image coordinate system of the developed image and the coordinates of the feet Pf in the world coordinate system. This therefore allows the detector 22 to detect the position of the person P in the real world.

(2) The detector 22 converts the coordinates of the feet Pf in the image coordinate system of the captured image into the coordinates of the feet Pf in the image coordinate system of the developed image by using the roll angle $\varphi$ and the yaw angle $\psi$ of the camera 21 as well as the pitch angle $\theta$ of the camera 21. This allows the detector 22 to take into consideration not only the pitch angle $\theta$ of the camera 21 but also the roll angle $\varphi$ and the yaw angle $\psi$ of the camera 21 to detect the position of the person P in the real world. This therefore increases the degree of freedom in the mounting posture of the camera 21.

(3) The cameras 21 are fish-eye cameras. This increases the angle of view of each camera 21, thereby allowing an increase in detection range of the person P. Furthermore, the detector 22 corrects distortion of the captured image If when converting the coordinates of the feet Pf in the image coordinate system of the captured image into the coordinates of the feet Pf in the image coordinate system of the developed image. This facilitates detection of the position of person P in the real world.

(4) When the captured image If is converted into the developed image Ie, the angle of view is limited. Accordingly, the developed image Ie may not show the whole of the person P depending on the position of the person P in the captured image If. Furthermore, as shown in FIG. 6, the person P is shown distorted in the developed image Ie. In the present embodiment, the training image and the image as input received by the machine training model M are the captured image If before distortion of which is corrected. This allows the machine training model M to be more effectively generated and increases the estimation accuracy of the coordinates of the feet Pf compared to a case where the training image and the image as input received by the machine training model M are the developed image Ie.

(5) The angle of the camera 21 may change. For example, the forklift truck 10 may tilt to the right or left when the forklift truck 10 turns, and the pitch angle $\theta$ therefore may change. Furthermore, the forklift truck 10 may tilt forward or backward when the forklift truck 10 carries a load or travels on a slope, and the roll angle $\varphi$ therefore may change. The obstacle detection device 20 according to the present embodiment includes the angle detector 23 that is configured to detect the angle of the camera 21. The detector 22 uses the angle of the camera 21 detected by the angle detector 23 to convert the coordinates of the feet Pf. This suppresses a decrease in the accuracy of detection of the position of the person P in the real world even if the angle of the camera 21 changes.

(6) In the present embodiment, the obstacle is the person P. The detection object is the feet Pf of the person P. The reference plane is the road surface R. The installation height H of the camera 21 from the road surface R corresponds to the distance from the camera 21 to the reference plane. This allows the distance from the camera 21 to the reference plane to be easily and correctly known. In addition, the feet Pf of the person P are in contact with the road surface R and are therefore suitable as the detection object for detection. This therefore increases the accuracy of detection of the position of the person P.

(7) The obstacle detection device 20 detects the position of the person P in the real world. This allows the controller 17 to control the travel of the forklift truck 10 and the warning operation of the warning device 16 more precisely, compared to a case where the obstacle detection device 20, for example, only detects the distance from the forklift truck 10 to the person P.

(8) The camera 21 is a monocular camera. This reduces the cost of detection of the person P, compared to a case where an expensive camera, such as a stereo camera, is used for the detection of the person P.

Modification examples

The above embodiment may be modified and implemented as follows. The embodiment and the following modified examples may be implemented in combination with each other within a technically consistent range.

○ The obstacle detected by the obstacle detection device 20 and the obstacle detection method is not limited to the person P, and may be an object other than a human.

○ The cameras 21 are not limited to fish-eye cameras. Each of the cameras 21 may be a wide-angle camera, or may be a camera with a narrower angle of view than an angle of view of a fish-eye camera and a wide-angle camera.

○ The number of the cameras 21 attached to the forklift truck 10 is not limited to two and may be changed as appropriate.

∘ The cameras 21 are attached to the head guard 13 of the forklift truck 10 in the present embodiment, but is not limited thereto. The cameras 21 may be attached to any component as appropriate depending on a detection range of an obstacle required.

∘ The cameras 21 may capture images of a view in front of or behind the forklift truck 10. In this case, the obstacle detection device 20 detects an obstacle present in front of or behind the forklift truck 10.

∘ In the above embodiment, for the sake of convenience, each of the cameras 21 is rotated only about the Y-axis, but may be rotated about the X-axis or the Z-axis.

∘ In the above embodiment, the detector 22 estimates the person P in the captured image If and indicates it with the bounding box B at the same time as estimating the coordinates of the feet Pf in the image coordinate system of the captured image If. However, the detector 22 may estimate only the coordinates of the feet Pf in the image coordinate system of the captured image If without estimating the person P in the captured image If and indicating it with the bounding box B. In this case, the machine training model M does not need to be trained for object detection as long as the machine training model M is trained for keypoint detection.

∘ The reference plane is not limited to the road surface R. For example, the distance from camera 21 to the head of the person P standing on the road surface R may be known by subtracting the height of the person P from the installation height H of the camera 21 from the road surface R. Accordingly, the reference plane may be a plane positioned at the height of the person P from the road surface R. In this case, the head of the person P or a helmet on the head of the person P serves as the detection object.

∘ In the above embodiment, the detector 22 estimates the coordinates of the feet Pf in the image coordinate system of the captured image by performing keypoint detection. However, the detector 22 may estimate the coordinates of the feet Pf in the image coordinate system of the captured image by performing object detection.

As shown in FIG. 7, the detector 22 may estimate the coordinates of the intersection of the bounding box B and a line L passing through an arbitrary point Ifp on the captured image If and the center Bc of the bounding box B as the coordinates of the feet Pf in the image coordinate system of the captured image. In the example shown in FIG. 7, the arbitrary point Ifp on the captured image If is a point located in the center of the bottom edge of the captured image If. The arbitrary point Ifp on the captured image If may be changed appropriately depending on the angle of the camera 21.
In such a case where the coordinates of the intersection of the bounding box B and the line L are estimated as the coordinates of the feet Pf, the machine training model M does not need to be trained to output the coordinates of the feet Pf in the image coordinate system of the captured image as long as the machine training model M is trained to output and indicate the person P in the input captured image If with the bounding box B. This is effective when the machine training model M is already trained to output and indicate the person P in the captured image If with the bounding box B or when there is no training data for training the machine training model M to output the coordinates of the feet Pf in the image coordinate system of the captured image. The coordinates of the feet Pf on the captured image If may be output based on the pixels of the imaging element of the camera 21.

∘ If the angle of the camera 21 is expected to remain almost unchanged, the obstacle detection device 20 does not need to include the angle detector 23. In this configuration, the detector 22 uses the angle of the camera 21 (i.e., the angle of the camera detected by the angle detector 23) stored in advance to convert the coordinates of the feet Pf in the image coordinate system of the captured image into the coordinates of the feet Pf in the image coordinate system of the developed image.

The industrial vehicle is not limited to the forklift truck 10. The industrial vehicle may be any industrial vehicle, such as a towing tractor.

Notes

The following will describe technical ideas that can be understood from the above embodiment and the modification examples.

Note 1

An obstacle detection device comprising:

a camera attached to an industrial vehicle; and
a detector configured to detect an obstacle from a captured image captured by the camera, wherein
the camera is arranged such that an optical axis of the camera is inclined with respect to a reference plane that is located at a known distance from the camera,
a part of the obstacle located on the reference plane serves as a detection object, and
the detector is configured to:

estimate coordinates of the detection object in an image coordinate system of the captured image;
convert the coordinates of the detection object in the image coordinate system of the captured image into coordinates of the detection object in an image coordinate system of a developed image, the developed image being parallel to the reference plane; and
calculate a position of the detection object on the reference plane by using the distance from the camera to the reference plane and a relational expression between the coordinates of the detection object in the image coordinate system of the developed image and coordinates of the detection object in a world coordinate system, the world coordinate system being a real world coordinate system with the camera centered.

Note 2

The obstacle detection device according to Note 1, wherein

the camera is a fish-eye camera or a wide-angle camera, and
the detector corrects distortion of the captured image when converting the coordinates of the detection object in the image coordinate system of the captured image into the coordinates of the detection object in the image coordinate system of the developed image.

Note 3

The obstacle detection device according to Note 2, wherein

the detector has a machine training model produced by machine learning using training data, the training data including a training image of the detection object and coordinates of the detection object on the training image, the machine training model receiving an image as input and outputting coordinates of the detection object on the image as input, and
the training image and the image as input received by the machine training model are the captured image before the distortion of the captured image is corrected.

Note 4

The obstacle detection device according to any one of Notes 1 to 3, wherein

the obstacle detection device includes an angle detector configured to detect an angle of the camera, and
the detector uses the angle of the camera detected by the angle detector to convert the coordinates of the detection object in the image coordinate system of the captured image into the coordinates of the detection object in the image coordinate system of the developed image.

Note 5

The obstacle detection device according to any one of Notes 1 to 4, wherein

the obstacle is a human,
the detection object is feet of the human, and
the reference plane is a road surface.

**Claims**

1.  An obstacle detection device (20) comprising:

a camera (21) attached to an industrial vehicle (10); and

a detector (22) configured to detect an obstacle (P) from a captured image (If) captured by the camera (21), **characterized in that**

the camera (21) is arranged such that an optical axis of the camera (21) is inclined with respect to a reference plane (R) that is located at a known distance from the camera (21),

a part of the obstacle (P) located on the reference plane (R) serves as a detection object (Pf), and

the detector (22) is configured to:

estimate coordinates (Uff, Vff) of the detection object (Pf) in an image coordinate system of the captured image (If);

convert the coordinates (Uff, Vff) of the detection object (Pf) in the image coordinate system of the captured image (If) into coordinates (Uef, Vef) of the detection object (Pf) in an image coordinate system of a developed image (Ie), the developed image (Ie) being parallel to the reference plane (R); and

calculate a position of the detection object (Pf) on the reference plane (R) by using the distance from the camera (21) to the reference plane (R) and a relational expression between the coordinates (Uef, Vef) of the detection object (Pf) in the image coordinate system of the developed image (Ie) and coordinates (Xf, Yf, Zf) of the detection object (Pf) in a world coordinate system, the world coordinate system being a real world coordinate system with the camera (21) centered.

2. The obstacle detection device (20) according to claim 1, **characterized in that**

the camera (21) is a fish-eye camera or a wide-angle camera, and

the detector (22) corrects distortion of the captured image (If) when converting the coordinates of (Uff, Vff) the detection object (Pf) in the image coordinate system of the captured image (If) into the coordinates (Uef, Vef) of the detection object (Pf) in the image coordinate system of the developed image (Ie).

3. The obstacle detection device (20) according to claim 2, **characterized in that**

the detector (22) has a machine training model (M) produced by machine learning using training data, the training data including a training image of the detection object (Pf) and coordinates of the detection object (Pf) on the training image, the machine training model (M) receiving an image as input and outputting coordinates of the detection object (Pf) on the image as input, and

the training image and the image as input received by the machine training model (M) are the captured image (If) before the distortion of the captured image (If) is corrected.

4. The obstacle detection device (20) according to any one of claims 1 to 3, **characterized in that**

the obstacle detection device (20) includes an angle detector (23) configured to detect an angle of the camera (21), and

the detector (22) uses the angle of the camera (21) detected by the angle detector (23) to convert the coordinates (Uff, Vff) of the detection object (Pf) in the image coordinate system of the captured image (If) into the coordinates (Uef, Vef) of the detection object (Pf) in the image coordinate system of the developed image (Ie).

5. The obstacle detection device (20) according to any one of claims 1 to 4, **characterized in that**

the obstacle (P) is a human (P),

the detection object (Pf) is feet of the human (Pf), and

the reference plane (R) is a road surface (R).

6. An obstacle detection method comprising:

detecting an obstacle (P) from a captured image (If) by using a detector (22), the captured image (If) being captured by a camera (21) attached to an industrial vehicle (10), the camera (21) being arranged such that an optical axis of the camera (21) is inclined with respect to a reference plane (R) that is located at a known distance from the camera (21), a part of the obstacle (P) located on the reference plane (R) serving as a detection object (Pf);

estimating coordinates (Uff, Vff) of the detection object (Pf) in an image coordinate system of the captured image (If);

converting the coordinates (Uff, Vff) of the detection object (Pf) in the image coordinate system of the captured image (If) into coordinates (Uef, Vef) of the detection object (Pf) in an image coordinate system of a developed image (Ie), the developed image (Ie) being parallel to the reference plane (R); and

calculating a position of the detection object (Pf) on the reference plane (R) by using the distance from the camera (21) to the reference plane (R) and a relational expression between the coordinates (Uef, Vef) of the detection object (Pf) in the image coordinate system of the developed image (Ie) and coordinates (Xf, Yf, Zf) of the detection object (Pf) in a world coordinate system, the world coordinate system being a real world coordinate system with the camera (21) centered.

FIG. 1

FIG. 2

# FIG. 3

UP
FRONT
LEFT ← → RIGHT
REAR DOWN

21
θ
Z
OPTICAL AXIS
Y Uf CAPTURED IMAGE PLANE
X
(Uff, Vff)
(Uef, Vef)
Ue Vf
Ve
P
DEVELOPED IMAGE PLANE H
(Xf, Yf, Zf)
R
Pf

## FIG. 4

```
        START

ACQUIRE CAPTURED IMAGE          ~S11

ESTIMATE COORDINATES OF FEET OF
PERSON IN IMAGE COORDINATE       ~S12
SYSTEM

CONVERT COORDINATES IN IMAGE COORDINATE
SYSTEM OF CAPTURED IMAGE INTO THAT IN    ~S13
IMAGE COORDINATE SYSTEM OF DEVELOPED
IMAGE

CALCULATE COORDINATES POSITION
OF FEET OF PERSON ON ROAD         ~S14
SURFACE

         END
```

## FIG. 5

FIG. 6

FIG. 7

Europäisches
Patentamt

European
Patent Office

Office européen
des brevets

## EUROPEAN SEARCH REPORT

Application Number

EP 24 18 8862

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU ZIZHANG ET AL: "Disentangling and Vectorization: A 3D Visual Perception Approach for Autonomous Driving Based on Surround-View Fisheye Cameras", 2021 IEEE/RSJ INTERNATIONAL CONFERENCE ON INTELLIGENT ROBOTS AND SYSTEMS (IROS), IEEE, 27 September 2021 (2021-09-27), pages 5576-5582, XP034051519, DOI: 10.1109/IROS51168.2021.9636707 [retrieved on 2021-12-03] * Section V; page 5577; figure 2 * * Section III.A.1.; page 5578, column 1 - column 2 * * Section I; page 5576, column 2 * * Section I; page 5577, column 1; figure 1 * | 1-4,6 | INV. G06V10/44 G06V20/58 |
| L | MALLOT H A ET AL: "INVERSE PERSPECTIVE MAPPING SIMPLIFIES OPTICAL FLOW COMPUTATION AND OBSTACLE DETECTION", BIOLOGICAL CYBERNETICS, SPRINGER BERLIN HEIDELBERG, BERLIN/HEIDELBERG, vol. 64, no. 3, 1 January 1991 (1991-01-01), pages 177-185, XP008052469, ISSN: 0340-1200, DOI: 10.1007/BF00201978 * Section 3.3; page 180 * | 1-4,6 | TECHNICAL FIELDS SEARCHED (IPC) G06V |

-/--

The present search report has been drawn up for all claims

| Place of search | Date of completion of the search | Examiner |
|---|---|---|
| The Hague | 20 December 2024 | Gissot, Samuel |

EPO FORM 1503 03.82 (P04C01)

Europäisches
Patentamt
European
Patent Office
Office européen
des brevets

**EUROPEAN SEARCH REPORT**

Application Number

EP 24 18 8862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM YOUNGSEOK ET AL: "Deep Learning based Vehicle Position and Orientation Estimation via Inverse Perspective Mapping Image", 2019 IEEE INTELLIGENT VEHICLES SYMPOSIUM (IV), IEEE, 9 June 2019 (2019-06-09), pages 317-323, XP033606089, DOI: 10.1109/IVS.2019.8814050 [retrieved on 2019-08-26] * Section I; page 318, column 1 * * Section III.; page 319, column 1; figure 2 * * Section III.A.; page 319 - column 2 * * Section III.B.; page 320, column 1 * * Section V; page 322 * * Section V; page 323 * | 1,4-6 | |
| A | ALVES JOÃO ET AL: "Camera-Inertial Sensor modelling and alignment for Visual Navigation", PROCEEDINGS OF THE INTERNATIONAL CONFERENCE ON ADVANCED ROBOTICS (ICAR), [Online] 1 July 2003 (2003-07-01), pages 1693-1698, XP055806774, Retrieved from the Internet: URL:https://citeseerx.ist.psu.edu/viewdoc/download?doi=10.1.1.379.5738&rep=rep1&type=pdf> [retrieved on 2024-11-29] * Section I; page 1693 * | 4 | **TECHNICAL FIELDS SEARCHED (IPC)** |

The present search report has been drawn up for all claims

| Place of search | Date of completion of the search | Examiner |
|---|---|---|
| The Hague | 20 December 2024 | Gissot, Samuel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................

& : member of the same patent family, corresponding
    document

EPO FORM 1503 03.82 (P04C01)

**EP 4 506 904 A1**

**REFERENCES CITED IN THE DESCRIPTION**

**Patent documents cited in the description**

- JP 6940906 B